# EUROPÄISCHE PATENTSCHRIFT

(11) **EP 0 788 291 B1**
(45) Veröffentlichungstag und Bekanntmachung des Hinweises auf die Patenterteilung: **14.02.2001**
(21) Anmeldenummer: 96108315.1
(22) Anmeldetag: 23.05.1996
(51) Int. Cl.: H05B 1/02, A23L 1/20, B63B 25/16, F24H 1/00, F25D 17/06, G05D 23/24, G05D 23/19, G01K 17/06

(54) **Verfahren zur Bestimmung und zur Anzeige der Restzeit eines Behandlungsprogramms in einem Haushaltgerät**
Method for determining and displaying the remaining operating time of a processing programme in a domestic apparatus
Méthode de détermination et de visualisation du temps nécessaire à l'achèvement du programme d'un appareil ménager

(30) Priorität: 07.08.1995 DE 19528980
(43) Veröffentlichungstag der Anmeldung: 06.08.1997
(73) Patentinhaber: BSH Bosch und Siemens Hausgeräte GmbH, 81669 München (DE)
(72) Erfinder: Böldt, Frank, Dipl.-Ing., 10409 Berlin (DE)

(56) Entgegenhaltungen:
- DE-A- 3 703 671
- US-A- 4 591 988
- US-A- 4 725 001
- US-A- 4 843 833

## Beschreibung

Die Erfindung geht aus von einem Verfahren zur Bestimmung und zur Anzeige der Restzeit eines Behandlungsprogramms in einem Haushaltgerät, das mit einer elektrischen Heizeinrichtung zum Erwärmen eines zur Behandlung dienenden Mediums ausgerüstet ist, dessen Temperatur kontinuierlich überwacht wird, auf der Basis einer Zeitabschätzung aufgrund eines Temperaturgradienten des Mediums über einem Aufheiz-Zeitabschnitt.

Ein derartiges Verfahren ist aus der DE 37 03 671 A1 bekannt. Darin wird davon ausgegangen, daß die elektrische Heizeinrichtung eine Abgabeleistung aufweist, die ihrer Nennleistung entspricht. Bei der Vielfalt von Varianten von Heizkörpern können in der Nennleistung, wie auch in der tatsächlichen Abgabeleistung erhebliche Schwankungen vorliegen, die auf den Temperaturgradienten einen starken Einfluß ausüben und über den Temperaturgradienten wesentlich in die Größe der errechneten Restzeit eingeht.

Der Erfindung liegt die Aufgabe zugrunde, ein Verfahren der eingangs genannten Art zu finden, bei der Variationen der abgegebenen Heizleistung des installierten elektrischen Heizkörpers automatisch erkannt und für spätere Restzeitbestimmungen als Rechengröße berücksichtigt werden.

Erfindungsgemäß wird diese Aufgabe dadurch gelöst, daß zur Bestimmung des den Gradienten bestimmenden Parameters "installierte Heizleistung" ein initialisierender Prüfprogramm-Abschnitt vorgeschaltet wird, für den eine definierte Menge des Mediums während einer bekannten Zeitdauer mit der elektrischen Heizeinrichtung aufgeheizt wird, und daß aus der erreichten Temperaturerhöhung, der definierten Menge des Mediums und der bekannten Zeitdauer der Parameter "installierte Heizleistung" und/oder ein seiner Größe entsprechender Vergleichswert errechnet und für spätere Restzeitbestimmungen als Rechengröße in einem nichtflüchtigen Speicher abgelegt wird.

Bei Anwendung der Erfindung können unterschiedliche Bestükkungsvarianten für elektrische Heizeinrichtungen bezüglich ihrer Leistungsabgabe automatisch erkannt werden. Außerdem sind infolge von Montagefehlern entstandene Fehlschaltungen von Einzel-Heizkörpern automatisch erkennbar, wenn beispielsweise statt einer Parallelschaltung von Heizkörpern eine Serienschaltung entstanden ist.

Gemäß einer vorteilhaften Weiterbildung des erfindungsgemäßen Verfahrens ist der Prüfprogramm-Abschnitt von der Außenseite des Haushaltgerätes abrufbar. In Ausbildung der Erfindung können dann Prüfprogramm-Abschnitte der erfindungsgemäßen Art zu einem beliebigen Zeitpunkt nach Auslieferung des Haushaltgerätes aus der Fertigung auf eine sich inzwischen veränderte tatsächliche Heizleistung eingestellt werden. Beispielsweise kann auf Wunsch des Kunden ein Heizstab mit vom Serienstand abweichender Leistungsabgabe eingebaut werden. Danach kann durch Abruf des Prüfprogramm-Abschnitts diese neue "installierte Heizleistung" für spätere Restzeitbestimmungen als Rechengröße im nichtflüchtigen Speicher abgelegt werden. Auch die folgenden Restzeitbestimmungen bleiben dann genügend genau.

Das erfindungsgemäße Verfahren kann in einer elektronischen Steuereinrichtung für ein Haushaltgerät angewendet werden, das mit einer elektrischen Heizeinrichtung zum Erwärmen eines für den durch das Haushaltgerät abzuwickelnden Prozeß benötigten Mediums ausgerüstet ist und mindestens einen an die Steuereinrichtung angeschlossenen Temperatursensor für das Medium enthält und in dessen Steuereinrichtung ein Prüfprogramm zum Prüfen mindestens einer Funktion des Haushaltgerätes gespeichert ist. Gemäß einer Weiterbildung der Erfindung ist diese elektronische Steuereinrichtung in der Weise vorbereitet, daß beim Aufrufen des Prüfprogramms ein Signal über die Einschaltung der Heizeinrichtung und ein weiteres Signal vom Temperatursensor an der Steuereinrichtung anliegt, die mit einer Zeitbasis-Schaltung verbunden ist, die beim Abrufen des Prüfprogramms und/oder beim Einschalten der Heizeinrichtung startbar ist und an einer vorbestimmten Zeitmarke die Signale über die Einschaltung der Heizeinrichtung und vom Temperatursensor abermals aufnimmt und mit den betreffenden Signalen beim Aufrufen des Prüfprogramms und/oder beim Einschalten der Heizeinrichtung vergleicht.

Spezielle Prüfprogramme, die am Ende eines Herstellungsprozesses die Funktion der Heizung und weitere Maschinenfunktionen automatisch prüft, sind bekanntermaßen in elektronischen Steuereinrichtungen von Haushaltgeräten bereits installiert. Ein solches Prüfprogamm erkennt eine richtige Funktion der Heizung, wenn innerhalb eines bestimmten Zeitrahmens das eingefüllte Wasser um eine bestimmte Temperaturdifferenz, z.B. Δϑ = 3°C, aufgeheizt wird. Der Zeitrahmen ist so eingerichtet, daß auch die gewünschte Aufheizung mit einer Heizleistung, die in einer Reihe von zu vergleichenden Heizkörpern am geringsten ist, die geforderte Temperaturdifferenz noch erreicht wird.

Um nun für ein Verfahren zur Bestimmung und gegebenenfalls Anzeige der restlichen noch abzuarbeitenden Programmzeit in einem Haushaltgerät die Restzeit möglichst genau errechnen zu können, muß einerseits die Dauer der Aufheizphase berücksichtigt werden. Diese Aufheizdauer hängt einerseits von der vorgegebenen Temperaturdifferenz ab und andererseits von der Anfangstemperatur des aufzuheizenden Mediums. Bisher ist man bei solchen Verfahren zum Bestimmen der Restzeit davon ausgegangen, daß die Heizleistung des installierten Heizkörpers der Nennleistung des Heizkörpers entspricht. Dabei sind nennenswerte Fehler entstanden.

Bei Einsatz des erfindungsgemäßen Verfahrens in einer Waschmaschine wird eine definierte Wassermenge, z.B. immer bis zum Erreichen des ersten Schaltniveaus eines Druckgebers, in den Laugenbehälter eingefüllt, damit in dieser Beziehung immer gleiche Ausgangsbedingungen vorliegen. Dann wird unter Verwendung des Microcontrollers der Steuerung diejenige Zeitdauer festgestellt, innerhalb der die definierte Wassermenge um Δϑ = n°C (z.B. n = 3) aufgeheizt wird. Ein Heizkörper höherer Leistung heizt die definierte Wassermenge in kürzerer Zeit auf als ein Heizkörper geringerer Leistung. Der ermittelte Temperatur-Gradient und/oder ein der Größe der "installierten Heizleistung" entsprechender Vergleichswert wird im nichtflüchtigen Speicher des Microcontrollers abgelegt und bei späteren Berechnungen der Restzeit in jedem abgerufenen Waschprogramm berücksichtigt.

Das erfindungsgemäße Verfahren hat den Vorteil, daß unterschiedliche Bestückungsvarianten von Heizkörpern automatisch erkannt und entsprechende Vergleichswerte im nichtflüchtigen Speicher für spätere Berechnungen gleich welcher Art, in denen die Heizleistung eine bestimmende Rolle spielt, abgelegt werden. Fehlschaltungen von beispielsweise mehreren im Haushaltgerät verteilt angeordneten Heizkörpern können ebenfalls durch ein erfindungsgemäßes Prüfprogramm automatisch erkannt werden. Das Prüfprogramm kann so ausgelegt sein, daß es eine Fehlermeldung auslöst, wenn die erkannte "installierte Heizleistung" von einer Bandbreite abweicht, die durch sämtliche möglichen und ordnungsgemäßen Bestückungsvarianten unter Einberechnung ihrer Toleranzen begrenzt ist. Beispielsweise kann eine Fehlschaltung durch Reihenschaltung von zwei Heizkörpern entstehen, die ordnungsgemäß als Parallelschaltung installiert hätten sein sollen. Die dann erkannte "installierte Heizleistung" von einem Viertel des Nennwerts der Parallelschaltung würde durch das Prüfprogramm eine sofortige Fehlermeldung auslösen.

Spätere Änderungen der "installierten Heizleistung" könnten ohne weiteres dadurch berücksichtigt werden, daß der Prüfprogramm-Abschnitt von der Außenseite des Haushaltgerätes abrufbar eingerichtet ist, z.B. durch Eingabe einer bestimmten, für keine der vorgesehenen Programmeingabe-Handlungen belegten Reihenfolge von Eingabe-Handlungen. Eine solche Änderung der "installierten Heizleistung" kann durch Wechseln der Heizkörper oder auch durch Alterung der Heizkörper entstehen. Sollte der Kunde im Verlaufe der Betriebsdauer eines Haushaltgerätes erkennen, daß die errechnete und angezeigte Restzeit von den tatsächlichen Verhältnissen im Gegensatz zum Neuzustand des Haushaltgerätes abweicht, dann könnte durch abermaligen Aufruf des Prüfprogramm-Abschnittes eine Anpassung an die veränderten Heizleistungs-Verhältnisse vorgenommen werden.

## Patentansprüche

1. Verfahren zur Bestimmung und gegegenenfalls zur Anzeige der Restzeit eines Behandlungsprogramms in einem Haushaltgerät, das mit einer elektrischen Heizeinrichtung zum Erwärmen eines zur Behandlung dienenden Mediums ausgerüstet ist, dessen Temperatur kontinuierlich überwacht wird, auf der Basis einer Zeitabschätzung aufgrund eines Temperatur-Gradienten des Mediums über einen Aufheizzeitabschnitt, **dadurch gekennzeichnet,** daß zur Bestimmung des den Gradienten bestimmenden Parameters "installierte Heizleistung" ein initialisierender Prüfprogramm-Abschnitt vorgeschaltet wird, für den eine definierte Menge des Mediums während einer bekannten Zeitdauer mit der elektrischen Heizeinrichtung aufgeheizt wird, und daß aus der erreichten Temperaturerhöhung, der definierten Menge des Mediums und der bekannten Zeitdauer der Parameter "installierte Heizleistung" und/oder ein seiner Größe entsprechender Vergleichswert errechnet und für spätere Restzeitbestimmungen als Rechengröße in einem nichtflüchtigen Speicher abgelegt wird.

2. Verfahren nach Anspruch 1, **dadurch gekennzeichnet,** daß der Prüfprogramm-Abschnitt von der Außenseite des Haushaltgerätes abrufbar eingerichtet ist.

3. Elektronische Steuereinrichtung zum Durchführen des Verfahrens nach Anspruch 1 oder 2 in einem Haushaltgerät, das mit einer elektrischen Heizeinrichtung zum Erwärmen eines für den durch das Haushaltgerät abzuwickelnden Prozeß benötigten Mediums ausgerüstet ist und mindestens einen an die Steuereinrichtung angeschlossenen Temperatursensor für das Medium enthält und in dessen Steuereinrichtung ein Prüfprogramm zum Prüfen mindestens einer Funktion des Haushaltgerätes gespeichert ist, **dadurch gekennzeichnet,** daß beim Aufrufen des Prüfprogramms ein Signal über die Einschaltung der Heizeinrichtung und ein weiteres Signal vom Temperatursensor an der Steuereinrichtung anliegt, die mit einer Zeitbasis-Schaltung verbunden ist, die beim Abrufen des Prüfprogramms und/oder beim Einschalten der Heizeinrichtung startbar ist und an einer vorbestimmten Zeitmarke die Signale über die Einschaltung der Heizeinrichtung und vom Temperatursensor abermals aufnimmt und mit den betreffenden Signalen beim Aufrufen des Prüfprogramms und/oder beim Einschalten der Heizeinrichtung vergleicht.

## Claims

1. Method of determining and optionally indicating the remaining time of a treatment program in a domestic appliance, which is equipped with an electric treating device for heating of a medium serving for the treatment, the temperature of which medium is continuously monitored, on the basis of a time estimation based on a temperature gradient of the medium over a heating-up time section, characterised in that for determination of the parameter "installed heating power", which determines the gradient, an initialising test program segment is connected upstream, for which a defined quantity of the medium is heated up by the electrical heating device during a known time period, and that the parameter "installed heating power" and/or a comparison value corresponding to the magnitude thereof is or are calculated from the attained temperature increase, the defined quantity of the medium and the known time period and is or are filed as a computing magnitude in a non-volatile store for later determinations of remaining time.

2. Method according to claim 1, characterised in that the checking program segment is equipped to be able to be called up from the exterior of the domestic appliance.

3. Electric control device for carrying out the method according to claim 1 or 2 in a domestic appliance, which is equipped with an electric heating device for heating a medium required for the process to be performed by the domestic appliance and comprises at least one temperature sensor, which is connected to the control device, for the medium, and a test program for checking at least one function of the domestic appliance is stored in the control device thereof, characterised in that on calling up of the checking program a signal about the switching-on of the heating device and a further signal from the temperature signal are present at the control device, which is connected with a time basis circuit, which can be started on calling-up of the test program and/or on switching-on of the heating device and which at a predetermined time point again receives the signals about the switching-on of the heating device and from the temperature sensor and compares these with the relevant signals on calling-up of the test program and/or on switching-on of the heating device.

## Revendications

1. Procédé de détermination et, le cas échéant, de visualisation du temps restant d'un programme de traitement d'un appareil ménager qui est équipé d'un dispositif de chauffage électrique pour chauffer un milieu servant au traitement, dont la température est surveillée en continu, en se fondant sur une estimation de temps en vertu d'un gradient thermique du milieu sur une période de temps de chauffage, caractérisé en ce que pour déterminer le paramètre 'puissance calorifique installée' qui détermine le gradient, une section de programme de contrôle d'initialisation est intercalée, pour laquelle une quantité définie du milieu est chauffée avec le dispositif de chauffage électrique pendant une durée connue et en ce que, à partir de l'augmentation de température obtenue, de la quantité définie du milieu et de la durée connue, le paramètre 'puissance calorifique installée' et / ou une valeur comparative correspondant à sa grandeur est calculé(e) et, pour des déterminations ultérieures du temps restant, est classé(e) en tant qu'opérande dans une mémoire non volatile.

2. Procédé selon la revendication 1, caractérisé en ce que la section de programme de contrôle est implantée de manière à pouvoir être appelée de l'extérieur de l'appareil ménager.

3. Dispositif de commande électronique destiné à exécuter le procédé selon la revendication 1 ou 2 dans un appareil ménager équipé d'un dispositif de chauffage électrique pour chauffer un milieu nécessaire pour le processus devant être exécuté par l'appareil ménager et qui contient au moins un capteur de température, raccordé au dispositif de commande, pour le milieu et dans le dispositif de commande est enregistré un programme de contrôle servant à contrôler au moins une fonction de l'appareil ménager, caractérisé en ce que lors de l'appel du programme de contrôle, un signal se rapportant à l'enclenchement du dispositif de chauffage et un autre signal du capteur de température arrive au dispositif de commande, lequel est relié à un circuit à base de temps qui peut démarrer lorsque le programme de contrôle est appelé et /ou lors de l'enclenchement du dispositif de chauffage et qui, à un repère de temps prédéterminé, reçoit de nouveau les signaux se rapportant à l'enclenchement du dispositif de chauffage et du capteur de température et les compare avec les signaux concernés lors de l'appel du programme de contrôle et / ou lors de l'enclenchement du dispositif de chauffage.
